# EUROPÄISCHE PATENTSCHRIFT

(11) **EP 1 190 397 B1**
(45) Veröffentlichungstag und Bekanntmachung des Hinweises auf die Patenterteilung: **27.07.2005**
(21) Anmeldenummer: 00931152.3
(22) Anmeldetag: 10.05.2000
(51) Int. Cl.: G07F 7/08, G06K 7/10

(54) **MOBILES ERFASSUNGSGERÄT ZUR AUSLIEFERUNGSABWICKLUNG**
MOBILE DATA ACQUISITION DEVICE FOR PROCESSING DELIVERIES
APPAREIL PORTATIF D'ENREGISTREMENT DE DONNEES POUR LE TRAITEMENT DE LIVRAISONS

(30) Priorität: 14.05.1999 DE 19922047; 04.06.1999 DE 19925524
(43) Veröffentlichungstag der Anmeldung: 27.03.2002
(73) Patentinhaber: Identcom GmbH, 47533 Kleve (DE)
(72) Erfinder: VAN SINDEREN, Johannes, D-47533 Kleve (DE)
(74) Vertreter: COHAUSZ & FLORACK
(86) Internationale Anmeldenummer: PCT/EP2000/004146
(87) Internationale Veröffentlichungsnummer: WO 2000/070565

(56) Entgegenhaltungen:
- US-A- 5 389 917
- US-A- 5 489 773
- US-A- 5 598 487
- PATENT ABSTRACTS OF JAPAN vol. 016, no. 532 (P-1448), 30. Oktober 1992 (1992-10-30) & JP 04 199297 A (HITACHI LTD), 20. Juli 1992 (1992-07-20)

## Beschreibung

Die Erfindung betrifft ein mobiles Erfassungsgerät zur Auslieferungsabwicklung mit einem Leser für an auszuliefernden Gegenständen angebrachte maschinenlesbare Informationen und einem Eingabesystem für den Empfänger identifizierende Informationen.

Derartige mobile Erfassungsgeräte zur Auslieferungsabwicklung sind aus dem Stand der Technik insbesondere in der Branche der Kurier-, Express- und Paketdienste bekannt. Diese bekannten mobilen Erfassungsgeräte werden von den Auslieferungsunternehmen zur Logistikoptimierung eingesetzt. Hierzu wird von dem Auslieferungspersonal bei der Auslieferung etwa eines Paketes eine auf dem Paket angebrachte maschinenlesbare Information, beispielsweise einen Barcode oder die in einem Transponder gespeicherte Information, mittels eines Lesers, insbesondere eines Barcode- oder Transponderlesers, eingelesen. Hierdurch wird der ausgelieferte Gegenstand identifiziert. Bei der Übergabe des auszuliefernden Paketes wird dann von dem Empfänger bei den zur Zeit aktuellen mobilen Erfassungsgeräten der Empfang über eine auf einem druckempfindlichen Display vorgenommene Unterschrift bestätigt. Die digitalisierten graphischen Daten dieser Unterschrift werden anschließend gespeichert und in Datenverarbeitungsanlagen der Auslieferungsunternehmen abgelegt, um eventuell zu einem späteren Zeitpunkt den Nachweis für die Auslieferung erbringen zu können.

Ein solches Erfassungsgerät ist aus US-A- 5598487 bekannt.

Darüber hinaus beschreibt US-A-5489773 ein mobiles Erfassungsgerät mit einem Leser, mit dem Informationen am Gegenstand eingelesen werden können, mit einem Leser, mit dem Empfänger identifizierende Informationen, beispielsweise eine Kreditkartennummer, eingelesen werden kann, und mit einem Eingabesystem, mit dem weitere den Empfänger identifizierende Informationen, beispielsweise eine PIN, eingegeben werden kann.

Problematisch ist bei den bekannten mobilen Erfassungsgeräten, daß zunächst der Aufwand für die Speicherung der digitalisierten graphischen Daten der Unterschrift des Empfängers vergleichsweise hoch ist und bei den häufig im sechs- oder siebenstelligen Bereich liegenden Abwicklungen von Auslieferungen pro Jahr zu einer nicht unerheblichen Belastung der Datenverarbeitungsanlage der Auslieferungsunternehmen führt. Weiter ist bei den bekannten mobilen Erfassungsgeräten problematisch, daß die tatsächliche Identifikation des Empfängers nicht bei der Übergabe des ausgelieferten Gegenstandes erfolgt, sondern lediglich anschließend anhand des Vergleiches von Unterschriften mit den digitalen graphischen Daten der bei der Übergabe geleisteten Unterschrift möglich ist. Eine Speicherung sämtlicher Unterschriften möglicher Empfänger und ein Vergleich dieser Unterschriften mit der aktuell geleisteten Unterschrift bei der Übergabe ist aus ersichtlichen Gründen nicht möglich. Dies ergibt eine Unsicherheit bei der Auslieferung, ob die in Empfang nehmende Person tatsächlich der Adressat des auszuliefernden Gegenstandes ist. Darüber hinaus ist die digitalisierte Unterschrift zur Zeit rechtlich nicht verwertbar.

Ausgehend von dem zuvor beschriebenen Stand der Technik liegt der vorliegenden Erfindung die Aufgabe zugrunde, ein mobiles Erfassungsgerät zur Auslieferungsabwicklung zur Verfügung zu stellen, welches bei geringer Belastung nachgeschalteter Datenverarbeitungsanlagen eine Identifikation des Empfängers bereits bei der Übergabe der auszuliefernden Gegenstände ermöglicht.

Die Erfindung wird durch die unabhängigen Ansprüche definiert.

Im Sinne der Erfindung ist das Eingabesystem als Leser für maschinenlesbare Identifikationsmittel des Empfängers ausgebildet. Dadurch, daß es mit dem erfindungsgemäß ausgestalteten mobilen Erfassungsgerät zur Auslieferungsabwicklung möglich ist, maschinenlesbare Identifikationsmittel, wie sie in verschiedener Form nahezu jeder natürlichen Person in den westlichen Industrienationen zur Verfügung stehen, zu nutzen, läßt sich der Aufwand für die zu speichernden Daten zum Nachweis der Auslieferung deutlich reduzieren, da hierzu keine graphischen Daten, sondern Klartextdaten abgespeichert werden müssen. Darüber hinaus ermöglichen maschinenlesbare Identifikationsmittel die Identifikation des Empfängers vor Ort, so daß wenn der Empfänger mit dem Adressaten übereinstimmt beispielsweise nur noch die Information gespeichert werden muß, daß der Gegenstand an den identifizierten Adressaten ausgeliefert worden ist. Schließlich entsprechen verschiedene maschinenlesbare Identifikationsmittel den gesetzlichen Anforderungen zur Identifikation und sind somit rechtlich verwertbar.

Das Erfassungsgerät gemäß der Erfindung unterstützt die Übergabeprozedur bei der Sammlung/Abholung, Beförderung, Lagerung und Zustellung von Ladehilfsmitteln, Waren und Gütern einschließlich Paketen sowie von Briefen, schriftlichen Mitteilungen und sonstigen Nachrichten.

Eine erste vorteilhafte Ausgestaltung erfährt das erfindungsgemäße mobile Erfassungsgerät dadurch, daß der Leser als Magnetkartenleser, Chipkartenleser oder Transponderleser ausgebildet ist. Zumindest in den westlichen Industrienationen ist ein sehr hoher Anteil der als Empfänger in Frage kommenden Personen im Besitz von eine Identifikation ermöglichenden Magnetkarten, Chipkarten/Smartcards oder Transpondern. Diese maschinenlesbaren Identifikationsmittel werden von ihren Besitzern im Rahmen von Verträgen mit Banken, Kreditkarteninstituten sowie in der Zukunft als ID-Chipkarten zur Identifikation im Internet, als Führerschein oder Personalausweis mit digitaler Signatur oder dergleichen genutzt.

Eine Mehrzahl der im Verkehr befindlichen maschinenlesbaren Identifikationsmittel sind zur Vermeidung von Mißbräuchen lediglich in Verbindung mit der Eingabe eines persönlichen Identifikationscodes zur Identifikation geeignet. Um diese zusätzliche Sicherheit auch bei dem erfindungsgemäßen mobilen Erfassungsgerät zu nutzen, ist dies dadurch ausgestaltet, daß eine Eingabeeinheit zur Eingabe eines persönlichen Identifikationscodes vorgesehen ist.

Die bereits angesprochenen, umfangreichen im Verkehr befindlichen maschinenlesbaren Identifikationsmittel werden sehr häufig im Zusammenhang mit dem elektronischen Zahlungsverkehr eingesetzt. Insbesondere bei der Auslieferung von Nachnahmesendungen ergibt sich also eine besonders praktikable Ausgestaltung des erfindungsgemäßen mobilen Erfassungsgerätes dadurch, daß eine Datenverarbeitungseinheit zur Abwicklung von elektronischem Zahlungsverkehr vorgesehen ist. Unter einem Identifikationscode im Sinne der Erfindung sind nicht nur über eine Tastatur eingebbare Zahlen- oder Buchstabencodes zu verstehen sondern auch biometrische Daten, die bei der Auslieferung von dem Empfänger abgenommen werden. Diese Identifikationsverifikation über biometrische Daten ist für den Vergleich von Fingerabdrücken, Gesichtsmerkmale, Stimmmerkmale oder Merkmale der Iris des menschlichen Auges bereits heute verfügbar und wird in Zukunft voraussichtlich beispielsweise auch im Rahmen der Überprüfung von genetischen Merkmalen - sogenannter biologischer Barcode - möglich sein.

Die Nutzung der beschriebenen biometrischen Identifikationscodes kann einerseits in der Form erfolgen, daß eine ID-Chipkarte die Identifikation lediglich durchführt, wenn eine auf dieser ID-Chipkarte durchzuführende biometrische Identifikation, beispielsweise durch Auflegen des Fingers auf einen Fingerabdrucksensor auf der Karte, positiv ist. In diesem Beispiel erfolgt also die Nutzung eines persönlichen Identifikationscodes in dem maschinenlesbaren Informationsmittel. Hierdurch erübrigen sich nachträgliche, aufwendige Verwaltungsaufgaben.

Eine andere Möglichkeit besteht darin, die Identifikationscodes in einer zentralen Datenbank zu speichern, um diese, z.B. zur Vorbeuge von Mißbräuchen oder zur zusätzlichen Abfrage bei der Übergabe von hohen Werten, über das mobile Erfassungsgerät zu nutzen. Hierzu können die vorgangsbezogenen Daten beispielsweise in dem mobilen Erfassungsgerät vorgehalten werden oder per Datenfunk an dieses Erfassungsgerät übertragen werden.

Da die Abwicklung des elektronischen Zahlungsverkehrs bei einem Teil der Systeme auf einen Datenabgleich mit einer Datenverarbeitungsanlage bei dem zugehörigen Finanzinstitut angewiesen ist, ist es vorteilhaft, daß zur Herstellung dieser Verbindung zwischen dem mobilen Erfassungsgerät und der beschriebenen Datenverarbeitungsanlage eine Mobilfunkeinheit in dem erfindungsgemäßen mobilen Erfassungsgerät vorgesehen ist. Diese Mobilfunkeinheit kann darüber hinaus von dem Auslieferungspersonal zur Kommunikation beispielsweise mit der Zentrale des Auslieferungsunternehmens genutzt werden.

Neben dem Nachweis der Übergabe an einen identifizierten Empfänger ist es je nach Anwendung auch erforderlich oder vorteilhaft, den Ort der Auslieferung dokumentieren zu können. Hierzu ist das erfindungsgemäße mobile Erfassungsgerät dadurch weiter ausgestaltet, daß eine Ortungseinheit vorgesehen ist.

Damit nicht bei jeder Auslieferung eine Verbindung zwischen dem erfindungsgemäßen mobilen Erfassungsgerät und einer Zentraleinheit erforderlich ist, ist es vorteilhaft, daß ein Datenspeicher zur Speicherung insbesondere von identifikationsbezogenen Daten vorgesehen ist.

Eine im Hinblick auf die Übertragung der Daten von dem erfindungsgemäßen mobilen Erfassungsgerät an eine Zentraleinheit und die Sicherstellung der Energieversorgung des erfindungsgemäßen mobilen Erfassungsgerätes besonders vorteilhafte Ausgestaltung erfährt das Erfassungsgerät dadurch, daß eine mechanisch-elektrische Schnittstelle zur Herstellung einer Verbindung mit einer Datenaustausch- und/oder Ladestation vorgesehen ist.

Es ist zur Erleichterung der Migration von mobilen Erfassungsgeräten wie sie aus dem Stand der Technik bekannt sind zu einem erfindungsgemäßen mobilen Erfassungsgerät unter Umständen vorteilhaft, wenn das erfindungsgemäße mobile Erfassungsgerät ein Eingabesystem aufweist, welches nicht nur erfindungsgemäß als Leser für maschinenlesbare Identifikationsmittel des Empfängers ausgebildet ist, sondern darüber hinaus auch die bisherige Funktionalität zur Verfügung stellt, nämlich über ein druckempfindliches Display zur Erfassung der Unterschrift des Kunden.

Nicht beanspruchte Erweiterungen der Lehre der Erfindung können beispielweise aus einem Zusatzmodul für ein mobiles Erfassungsgerät zur Auslieferungsabwicklung bestehen. Für ein solches Zusatzmodul ist die oben hergeleitete und aufgezeigte Aufgabe dadurch gelöst, daß das Zusatzmodul einen Leser für maschinenlesbare Identifikationsmittel des Empfängers und eine zur Kommunikation mit dem Eingabesystem des mobilen Erfassungsgerätes geeignete Schnittstelle aufweist.

Ein solches Zusatzmodul bietet einen Investitionsschutz für die bislang und zukünftig in Betrieb genommenen mobilen Erfassungsgeräte zur Auslieferungsabwicklung, die die vorliegende Erfindung noch nicht verwirklichen. Die Verwendung eines Zusatzmoduls ermöglicht die Realisierung der oben genannten Vorteile, in dem die über den Leser für maschinenlesbare Identifikationsmittel gewonnenen Ergebnisse über eine Schnittstelle, beispielsweise eine Infrarot- oder Funkschnittstelle, an ein angepaßtes mobiles Erfassungsgerät zur Auslieferungsabwicklung übertragen werden. Selbstverständlich läßt sich das Zusatzmodul auch durch die bereits im Hinblick auf das mobile Erfassungsgerät beschriebenen Ausgestaltungen vorteilhaft weiterbilden.

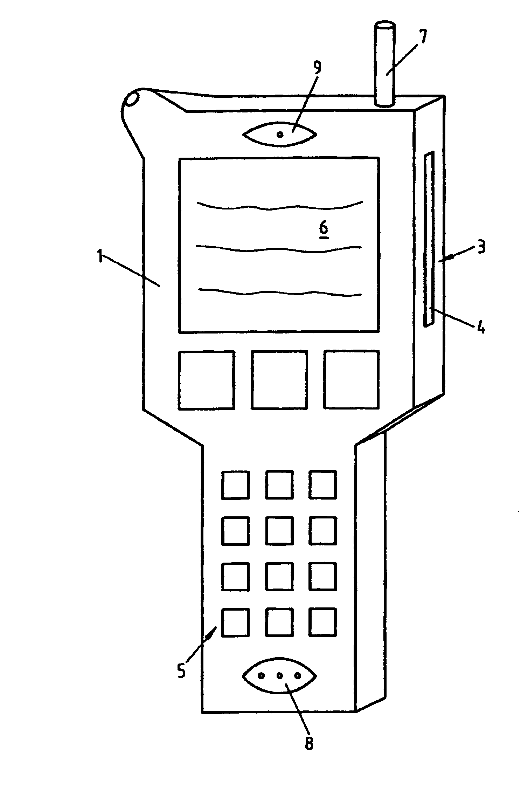

Es gibt nun eine Vielzahl von Möglichkeiten, das erfindungsgemäße mobile Erfassungsgerät zur Auslieferungsabwicklung und das Zusatzmodel für ein mobiles Erfassungsgerät auszugestalten und weiterzubilden. Hierzu wird beispielsweise verwiesen einerseits auf die dem Patentanspruch 1 nachgeordneten Patentansprüche andererseits auf die Beschreibung eines Ausführungsbeispiels in Verbindung mit der Zeichnung.

In der Zeichnung zeigt die einzige Figur ein Ausführungsbeispiel eines erfindungsgemäßen mobilen Erfassungsgerätes zur Auslieferungsabwicklung in einer perspektivischen Ansicht.

Das in der einzigen Figur dargestellte Ausführungsbeispiel eines erfindungsgemäßen mobilen Erfassungsgerätes zur Auslieferungsabwicklung weist ein Gehäuse 1 mit einem integrierten Strichcodeleser 2 für auf auszuliefernden Gegenständen angebrachte Barcodes und erfindungsgemäß einen Chipkartenleser 3 zum Lesen von in der einzigen Figur nicht dargestellten Chipkarten eines Empfängers auf. Selbstverständlich ist die Erfindung, wie bereits erwähnt, nicht auf die Verwendung von Chipkarten als maschinenlesbare Identifikationsmittel des Empfängers eingeschränkt. Es können beispielsweise auch Geldkarten oder Kreditkarten mit Magnetstreifen eingesetzt werden. Statt der Verwendung von Strichcodelesern ist auch die Verwendung beispielsweise von Scannern oder Transponderlesern möglich. Es sind heute bereits einfach zu handhabende Scanner zur Erkennung von zweidimensionalen Barcodes bekannt.

Bei der Auslieferung wird von dem Auslieferungspersonal in der Regel zunächst der Barcode an dem auszuliefernden Gegenstand mit Hilfe des Strichcodelesers 2 in das mobile Erfassungsgerät eingelesen und anschließend eine Chipkarte in einen Schlitz 4 des Chipkartenlesers 3 eingeführt woraufhin die Identifikation des Empfängers etwa mittels einer sogenannten digitalen Unterschrift erfolgt.

Je nach dem verwendeten Chipkartensystem ist zur Identifikation des Empfängers zusätzlich die Eingabe eines persönlichen Identifikationscodes über eine in der Regel numerische Eingabeeinheit 5 erforderlich.

Zur bedienerfreundlichen Abwicklung der Auslieferung weist das Ausführungsbeispiel eines erfindungsgemäßen mobilen Erfassungsgerätes ein Display 6 auf, über das beispielsweise Identifikationsbestätigungen des Empfängers abgelesen werden können. Je nach Stand der Technik bzw. Anwendbarkeit kann dieses Display auch wie bei heute verfügbaren sogenannten Palmtop Geräten ein LCD Schirm oder Touchscreen sein. In diesem Fall würde die Eingabetastatur ggf. entfallen und Eingaben über einen Stift oder durch Fingerberührung programmgesteuert möglich.

Nicht dargestellt ist in der einzigen Figur, daß das Ausführungsbeispiel eines erfindungsgemäßen mobilen Erfassungsgerätes eine Datenverarbeitungseinheit zur Abwicklung von elektronischem Zahlungsverkehr aufweist. Bei dem sogenannten Geldkartensystem kann diese nicht dargestellte Datenverarbeitungseinheit beispielsweise autark, d.h. ohne Verbindung mit einer zentralen Datenverarbeitungsanlage, eine elektronische Zahlung abwickeln. (Vgl. Anwendung Geräte in einer Tankstelle; Kundenkarten, Kreditkarten usw.). Auch die Erzeugung von Papierbelegen kann unter Umständen entfallen.

In dem Fall, in dem die Zahlung über ein sogenanntes Kreditkartensystem erfolgt, besteht in der Regel die Notwendigkeit, einen Datenabgleich mit einer zentralen Datenverarbeitungsanlage vorzunehmen, um die Zahlung zu bestätigen. Zur Herstellung dieser Verbindung zu einer zentralen Datenverarbeitungsanlage weist das in der einzigen Figur dargestellte Ausführungsbeispiel eine Mobilfunkeinheit auf, die unter anderem eine Sendeeinrichtung 7 zur Herstellung zu einem Mobilfunknetz umfaßt. Darüber hinaus umfaßt die Mobilfunkeinheit ein Mikrofon 8 und einen Lautsprecher 9, so daß mit dem Ausführungsbeispiel eines erfindungsgemäßen mobilen Erfassungsgerätes auch eine fernmündliche Kommunikation möglich ist.

Zur Ortung des Ausführungsbeispiels eines erfindungsgemäßen mobilen Erfassungsgerätes zur Auslieferungsabwicklung weist dieses eine in der einzigen Figur nicht explizit dargestellte Ortungseinheit auf, die hier das sogenannte Global Positioning System (GPS) nutzt. Mit Hilfe dieser nicht dargestellten Ortungseinheit ist es mit dem erfindungsgemäßen mobilen Erfassungsgerät möglich, den Ort der Auslieferung festzuhalten und in einem ebenfalls nicht dargestellten Datenspeicher zusammen mit den identifikationsbezogenen Daten abzulegen.

Schließlich weist das in der einzigen Figur dargestellte Ausführungsbeispiel, nicht im einzelnen dargestellt, eine mechanisch-elektrische Schnittstelle, einen sogenannten Cradle, zur Herstellung einer Verbindung mit einer Datenaustausch- und/oder Ladestation auf, mit der das mobile Erfassungsgerät beispielsweise im Transportfahrzeug in Verbindung gebracht wird. Zum Datenaustausch allein kann beispielsweise auch eine drahtlose Schnittstelle, z.B. eine Infrarotschnittstelle, genutzt werden.

Die Erfindung betrifft ein mobiles Multifunktions-Erfassungsgerät zur Warenübergabe und/oder Bargeldlosen Geldtransaktionen zwischen in der Regel unterschiedlichen Rechtspersonen (Gefahrenübergang).

Das Erfassungsgerät identifiziert die Ware durch das Erfassen des aufgebrachten Barcodes oder Transponders mittels eines eingebauten Scanner. Die den Empfänger identifizierenden Informationen werden gewonnen durch das Erfassen der digitalen Empfängerunterschrift von seiner Chipkarte mittels eines eingebauten Chipkartenlesers. Die Nutzungsberechtigung der Karte durch den Empfänger wird festgestellt durch die Prüfung seines eingegebenen Pincodes auf der eingebauten Tastatur, bzw. nummerischer Eingabe auf dem LCD Display mit einem Schreibstift oder direkter Eingabe durch Berührung eines Touchscreens. Der Chipkartenleser des Gerätes kann ebenfalls Kreditkarten, Geldkarten usw. lesen. Dabei ist ein belegloser Ablauf möglich durch das Lesen der digitalen Signatur von diesen Karten bzw. von einer zusätzlichen Signatur Karte. Die gespeicherten Daten können mittels Datenfunk wahlweise sofort oder nach Ansammlung bzw. Speicherung mehrerer Vorgänge übertragen werden. Alternativ ist die Übertragung mittels eines sogenannten Cradles im Batchverfahren möglich.

## Patentansprüche

1. Mobiles Erfassungsgerät zur Auslieferungsabwicklung mit
- einem Leser (2) zum Einlesen von an auszuliefernden Gegenständen angebrachten maschinenlesbaren Informationen,
- einem Leser (3) zum Einlesen von den Empfänger identifizierenden Informationen, der derart ausgebildet ist, dass er maschinenlesbare Identifikationsmittel des Empfängers lesen kann, und
- einem Eingabesystem zum Eingeben von den Empfänger identifizierenden Informationen,
**dadurch gekennzeichnet, dass** eine Ortungseinheit zur Dokumentation des Ortes der Auslieferung vorgesehen ist.

2. Mobiles Erfassungsgerät nach Anspruch 1,
**dadurch gekennzeichnet, dass** der Leser (3) als Magnetkartenleser, Chipkartenleser oder Transponderleser ausgebildet ist.

3. Mobiles Erfassungsgerät nach Anspruch 1 oder 2,
**dadurch gekennzeichnet, dass** eine Eingabeeinheit (5) zur Eingabe eines persönlichen Identifikationscodes vorgesehen ist.

4. Mobiles Erfassungsgerät nach einem der Ansprüche 1 bis 3, **dadurch gekennzeichnet, dass** eine Datenverarbeitungseinheit zur Abwicklung von elektronischem Zahlungsverkehr vorgesehen ist.

5. Mobiles Erfassungsgerät nach einem der Ansprüche 1 bis 4, **dadurch gekennzeichnet, dass** eine Mobilfunkeinheit vorgesehen ist.

6. Mobiles Erfassungsgerät nach einem der Ansprüche 1 bis 5, **dadurch gekennzeichnet, dass** ein Datenspeicher zur Speicherung insbesondere von identifikationsbezogenen Daten vorgesehen ist.

7. Mobiles Erfassungsgerät nach einem der Ansprüche 1 bis 6, **dadurch gekennzeichnet, dass** eine mechanisch-elektrische Schnittstelle zur Herstellung einer Verbindung mit einer Datenaustausch- und/oder Ladestation vorgesehen ist.

8. Mobiles Erfassungsgerät nach einem der Ansprüche 1 bis 7, **dadurch gekennzeichnet, dass** als den Empfänger identifizierende Informationen biometrische Daten eingegeben werden können, insbesondere Fingerabdrücke, Gesichtsmerkmale, Stimmmerkmale oder Merkmale der Iris des menschlichen Auges.

9. Verfahren zur Erfassung einer Auslieferungsabwicklung unter Verwendung eines mobilen Erfassungsgeräts, insbesondere eines nach einem der Ansprüche 1 bis 8 ausgebildeten Erfassungsgeräts, bei dem mittels eines Lesers an auszuliefernden Gegenständen angebrachte maschinenlesbare Informationen eingelesen werden, mittels eines weiteren Lesers den Empfänger identifizierende Informationen von maschinenlesbaren Identifikationsmitteln des Empfängers eingelesen werden und mittels eines Eingabesystems den Empfänger identifizierende Informationen eingegeben werden.

10. Verfahren nach Anspruch 9, **dadurch gekennzeichnet, dass** mittels des weiteren Lesers Magnetkarten, Chipkarten oder Transponder eingelesen werden.

11. Verfahren nach Anspruch 9 oder 10, **dadurch gekennzeichnet, dass** mittels einer Eingabeeinheit ein persönlicher Identifikationscode eingegeben wird und der Empfänger über die maschinenlesbaren Identifikationsmittel und dem Identifikationscode identifiziert wird.

12. Verfahren nach einem der Ansprüche 9 bis 11, **dadurch gekennzeichnet, dass** mittels einer Datenverarbeitungseinheit ein elektronischer Zahlungsvorgang abgewickelt wird.

13. Verfahren nach einem der Ansprüche 9 bis 12, **dadurch gekennzeichnet, dass** die anfallenden Daten mit Hilfe einer Mobilfunkeinheit an eine Zentrale übertragen werden.

14. Verfahren nach einem der Ansprüche 9 bis 13, **dadurch gekennzeichnet, dass** der Auslieferungsort mittels einer Ortungseinheit ermittelt wird.

15. Verfahren nach einem der Ansprüche 9 bis 14, **dadurch gekennzeichnet, dass** die identifikationsbezogenen Daten mit Hilfe eines Datenspeichers gespeichert werden.

16. Verfahren nach einem der Ansprüche 9 bis 15, **dadurch gekennzeichnet, dass** über eine mechanisch-elektrische Schnittstelle eine Verbindung mit einer Datenaustausch- und/oder Ladestation hergestellt wird.

17. Verfahren nach einem der Ansprüche 9 bis 16, **dadurch gekennzeichnet, dass** mittels des Eingabesystems biometrische Daten als den Empfänger identifizierende Informationen eingegeben werden, insbesondere Fingerabdrücke, Gesichtsmerkmale, Stimmmerkmale oder Merkmale der Iris des menschlichen Auges.

18. Verwendung eines mobilen Erfassungsgerätes mit einem Leser zum Einlesen von an auszuliefernden Gegenständen angebrachten maschinenlesbaren Informationen und einem Leser zum Einlesen von einen Empfänger identifizierenden Informationen, der derart ausgebildet ist, dass er maschinenlesbare Identifikationsmittel des Empfängers lesen kann, und einem Eingabesystem zum Eingeben von den Empfänger identifizierenden Informationen, wobei das Erfassungsgerät eine Überprüfung der Berechtigung des Empfängers zur Entgegennahme der Gegenstände und eine Dokumentation der Auslieferung der Gegenstände durchführt, **dadurch gekennzeichnet, dass** die Dokumentation mindestens den mittels einer Ortungseinheit erfassten Austieferung ort einschließt.

## Claims

1. Mobile data acquisition device for processing deliveries with
- a reader (2) for reading in machine-readable information attached to objects to be delivered,
- a reader (3) for reading in information that identifies the receiver, which is designed in such a way that it can read machine-readable identification means of the receiver, and
- an input system for entering information that identifies the receiver,
**characterised in that** a locating unit to document the place of delivery is provided.

2. Mobile data acquisition device according to claim 1, **characterised in that** the reader (3) is designed as a magnetic card reader, chip card reader or transponder reader.

3. Mobile data acquisition device according to claim 1 or 2, **characterised in that** an input unit (5) is provided for entering a personal identification code.

4. Mobile data acquisition device according to one of claims 1 to 3, **characterised in that** a data processing unit for processing electronic payments is provided.

5. Mobile data acquisition device according to one of claims 1 to 4, **characterised in that** a mobile radio unit is provided.

6. Mobile data acquisition device according to one of claims 1 to 5, **characterised in that** a memory is provided to store specifically identification-related data.

7. Mobile data acquisition device according to one of claims 1 to 6, **characterised in that** a mechanical-electrical interface is provided to create a connection with a data interchange and/or charging station.

8. Mobile data acquisition device according to one of claims 1 to 7, **characterised in that** biometric data can be entered as information identifying the receiver, in particular fingerprints, facial features, voice characteristics or characteristics of the iris of the human eye

9. Method of recording the processing of a delivery using a mobile data acquisition device, in particular a data acquisition device designed according to one of claims 1 to 6, whereby machine-readable information attached to objects to be delivered can be read in by means of a reader, information that identifies the receiver can be read in from machine-readable identification means of the receiver by means of a supplementary reader and information that identifies the receiver can be entered by means of an input system, the data acquisition device conducts a check to verify the authorisation of the receiver to accept the objects and documents the delivery of the objects, **characterised in that** the document includes at least the place of delivery recorded by means of a locating unit.

10. Method according to claim 9, **characterised in that** magnetic cards, chip cards or transponders are read in by the supplementary reader.

11. Method according to claim 9 or 10, **characterised in that** a personal identification code is entered by means of an input unit and the receiver is identified via the machine-readable information and the identification code.

12. Method according to one of claims 9 to 11, **characterised in that** an electronic payment procedure is carried out by means of a data processing unit.

13. Method according to one of claims 9 to 12, **characterised in that** the data collected is sent using a mobile radio unit to a central station.

14. Method according to one of claims 9 to 13, **characterised in that** the place of delivery is determined by means of a locating unit.

15. Method according to one of claims 9 to 14, **characterised in that** the identification-related data is stored using a memory.

16. Method according to one of claims 9 to 15, **characterised in that** a connection with a data interchange and/or charging station is created by means of a mechanical-electrical interface.

17. Method according to one of claims 9 to 16, **characterised in that** biometric data can be entered as information identifying the receiver, in particular fingerprints, facial features, voice characteristics or characteristics of the iris of the human eye.

18. Application of a mobile data acquisition device with a reader for reading in machine-readable information attached to objects to be delivered, and a reader for reading in information that identifies the receiver which is designed in such a way that it can read machine-readable identification means of the receiver, and an input system for entering information that identifies the receiver, the data acquisition device conducts a check to verify the authorisation of the receiver to accept the objects and documents the delivery of the objects, **characterised in that** the document includes at least the place of delivery recorded by means of a locating unit.

## Revendications

1. Appareil portatif d'enregistrement de données pour le traitement de livraisons, avec
- un lecteur (2) pour la lecture d'informations lisibles par machine, disposées sur les objets à livrer,
- un lecteur (3) pour la lecture d'informations identifiant le destinataire, qui est configuré de manière à pouvoir lire un moyen d'identification du destinataire, lisible par machine, et
- un système d'introduction de données pour entrer des informations identifiant le destinataire,
**caractérisé en ce qu'**une unité de radiogoniométrie est prévue pour indiquer l'endroit de livraison.

2. Appareil portatif d'enregistrement de données selon la revendication 1, **caractérisé en ce que** le lecteur (3) est du type d'un lecteur de carte magnétique, d'un lecteur de carte à puce ou d'un lecteur transpondeur.

3. Appareil portatif d'enregistrement de données selon la revendication 1 ou 2, **caractérisé en ce qu'**une unité d'enregistrement de données (5) est prévue pour l'enregistrement d'un code personnel d'identification.

4. Appareil portatif d'enregistrement de données selon l'une quelconque des revendications 1 à 3, **caractérisé en ce qu'**une unité de traitement des données est prévue, pour réaliser des opérations financières électroniques.

5. Appareil portatif d'enregistrement de données selon l'une quelconque des revendications 1 à 4, **caractérisé en ce qu'**une unité de téléphonie numérique mobile est prévue.

6. Appareil portatif d'enregistrement de données selon l'une quelconque des revendications 1 à 5, **caractérisé en ce qu'**une mémoire de données est prévue, pour mémoriser en particulier les données d'identification.

7. Appareil portatif d'enregistrement de données selon l'une quelconque des revendications 1 à 6, **caractérisé en ce qu'**une interface mécanique-électrique est prévue, pour permettre une liaison avec un poste d'échange de données et/ou de charge.

8. Appareil portatif d'enregistrement de données selon l'une quelconque des revendications 1 à 7, **caractérisé en ce que** comme informations identifiant le destinataire, on peut introduire des données biométriques, en particulier les empreintes digitales, des caractéristiques du visage, des caractéristiques vocales ou des caractéristiques de l'iris de l'oeil humain.

9. Procédé pour enregistrer un traitement de livraisons en utilisant un appareil portatif d'enregistrement de données, en particulier un appareil d'enregistrement de données selon l'une quelconque des revendications 1 à 8, avec lequel, à l'aide d'un lecteur, on lit des informations lisibles par machine, disposées sur les objets à livrer, à l'aide d'un autre lecteur, on lit des informations identifiant le destinataire, d'un moyen d'information lisible par machine, et à l'aide d'un système d'introduction de données du destinataire, on introduit des informations identifiant le destinataire, et où l'appareil d'enregistrement de données réalise une vérification de l'autorisation du destinataire pour la réception des objets et une documentation de la livraison des objets, **caractérisé en ce que** la documentation comprend au moins le site de livraison établi par une unité de radiogoniométrie.

10. Procédé selon la revendication 9, **caractérisé en ce qu'**à l'aide de l'autre lecteur, on lit des cartes magnétiques, des cartes à puce ou un transpondeur.

11. Procédé selon la revendication 9 ou 10, **caractérisé en ce qu'**à l'aide d'une unité d'enregistrement de données, on entre un code personnel d'identification et le destinataire est identifié par le moyen d'identification lisible par machine et le code d'identification.

12. Procédé selon l'une quelconque des revendications 9 à 11, **caractérisé en ce qu'**à l'aide d'une unité de traitement des données, on réalise des opérations financières électroniques.

13. Procédé selon l'une quelconque des revendications 9 à 12, **caractérisé en ce que** les données accumulées sont transférées à une centrale à l'aide d'une unité de téléphonie numérique mobile.

14. Procédé selon l'une quelconque des revendications 9 à 13, **caractérisé en ce** le site de livraison est déterminé à l'aide d'une unité de radiogoniométrie.

15. Procédé selon l'une quelconque des revendications 9 à 14, **caractérisé en ce** les données d'identification sont mémorisées à l'aide d'une mémoire de données.

16. Procédé selon l'une quelconque des revendications 9 à 15, **caractérisé en ce que** par une interface mécanique-électrique, on réalise une connexion avec un poste d'échange de données et/ou de charge.

17. Procédé selon l'une quelconque des revendications 9 à 16, **caractérisé en ce qu'**à l'aide du système d'enregistrement de données, on peut enregistrer des données biométriques comme informations identifiant le destinataire, en particulier les empreintes digitales, des caractéristiques du visage, des caractéristiques vocales ou des caractéristiques de l'iris de l'oeil humain.

18. Utilisation d'un appareil portatif d'enregistrement de données avec un lecteur pour la lecture d'informations lisibles par machine, disposées sur les objets à livrer et d'un lecteur pour la lecture d'informations identifiant le destinataire, qui est formé de manière à ce qu'il peut lire un moyen d'identification du destinataire, lisible par machine, et un système d'enregistrement de données pour entrer des informations identifiant le destinataire, et où l'appareil d'enregistrement de données réalise une vérification de l'autorisation du destinataire pour la réception des objets et une documentation de la livraison des objets, **caractérisé en ce que** la documentation comprend au moins le site de livraison établi par une unité de radiogoniométrie.
